# EUROPEAN PATENT APPLICATION

(11) **EP 4 664 598 A1**
(43) Date of publication of application: **17.12.2025**
(21) Application number: 24218322.6
(22) Date of filing: 09.12.2024
(51) Int. Cl.: H01M 10/0585, H01M 50/533, H01M 50/54, H01M 50/593, H01M 10/04, H01M 50/471

(54) **SECONDARY BATTERY**

(30) Priority: 14.06.2024 KR 20240077706
(71) Applicant: SAMSUNG SDI CO., LTD., Yongin-si, Gyeonggi-do 17084 (KR)
(72) Inventor: PARK, Holim, 17084 Yongin-si (KR); KIM, Minwoo, 17084 Yongin-si (KR)
(74) Representative: Marks & Clerk LLP

(57) **Abstract**

Provided is a secondary battery having improved structural stability. The electrode assembly includes a plurality of negative electrodes each including a negative electrode tab and a plurality of positive electrodes arranged alternately with the negative electrodes and each including a positive electrode tab, a first current collector electrically connected to the negative electrodes, and a first insulator disposed below the first current collector, wherein negative electrode tabs of at least some of the plurality of negative electrodes overlap in a first position to form a first negative electrode tab stack and negative electrode tabs of the others of the plurality of negative electrodes overlap in a second position, different from the first position, to form a second negative electrode tab stack, and the first insulator is disposed adjacent to the first negative electrode tab stack and the second negative electrode tab stack simultaneously.

## Description

### BACKGROUND

### 1. Field

This disclosure relates to secondary batteries.

### 2. Description of the Related Art

Unlike primary batteries, which cannot be recharged, secondary batteries refer to batteries that may be repeatedly charged and discharged and have been applied to various technical fields throughout the industry. In addition, in line with the technology development and growing demand for mobile devices, demand for secondary batteries as an energy source has rapidly increased.

The aforementioned information disclosed in the technology that forms the background of the present disclosure is only intended to improve understanding of the background of the present disclosure, and therefore may include information that does not constitute related art.

### SUMMARY

The present disclosure provides a secondary battery with improved structural stability.

However, the technical problems to be solved by the present disclosure are not limited to the aforementioned problems, and other problems not mentioned may be clearly understood by those skilled in the art from the description of the present disclosure below.

Additional aspects will be set forth in part in the description which follows and, in part, will be apparent from the description, or may be learned by practice of the presented embodiments of the disclosure.

In one embodiment, a secondary battery includes an electrode assembly including negative electrodes each including a negative electrode tab and positive electrodes arranged alternately with the negative electrodes and each including a positive electrode tab. The secondary battery also includes a first current collector electrically connected to the negative electrodes, and a first insulator below the first current collector. Negative electrode tabs of at least some of the negative electrodes overlap in a first position to form a first negative electrode tab stack and negative electrode tabs of the others of the negative electrodes overlap in a second position, different from the first position, to form a second negative electrode tab stack. The first insulator is adjacent to the first negative electrode tab stack and the second negative electrode tab stack.

In the present embodiment, the first insulator may include a bottom portion and a wall portion connected to the bottom portion to define a concave portion, and the bottom portion may include holes penetrating through the bottom portion.

In the present embodiment, the first negative electrode tab stack and the second negative electrode tab stack may not overlap each other in a thickness direction of the electrode assembly.

In the present embodiment, the negative electrode tabs of some of the negative electrodes may form a third negative electrode tab stack that is different from the first negative electrode tab stack and the second negative electrode tab stack, and the first negative electrode tab stack, the second negative electrode tab stack, and the third negative electrode tab stack may not overlap each other in a thickness direction of the electrode assembly.

In the present embodiment, the first insulator may be adjacent to the first negative electrode tab stack, the second negative electrode tab stack, and the third negative electrode tab stack and may have a step corresponding to the first negative electrode tab stack, the second negative electrode tab stack, and the third negative electrode tab stack in a plan view.

In the present embodiment, the secondary battery may further include a second current collector electrically connected to the positive electrodes and a second insulator below the second current collector. Positive electrode tabs of at least some of the positive electrodes may overlap in a third position to form a first positive electrode tab stack, and positive electrode tabs of the others of the positive electrodes may overlap in a fourth position different from the third position to form a second positive electrode tab stack. The second insulator may be adjacent to the first positive electrode tab stack and the second positive electrode tab stack.

In the present embodiment, the first positive electrode tab stack and the second positive electrode tab stack may be arranged substantially symmetric with respect to the first negative electrode tab stack and the second negative electrode tab stack.

In the present embodiment, the secondary battery may further include a negative electrode current collecting plate between the first negative electrode tab stack and the second negative electrode tab stack and the first current collector. The negative electrode current collecting plate may have a curved or bent shape to cover front and upper portions of the first negative electrode tab stack and the second negative electrode tab stack. The negative electrode current collecting plate may be welded to the first negative electrode tab stack and the second negative electrode tab stack in front portions of the first negative electrode tab stack and the second negative electrode tab stack, and the negative electrode current collecting plate may be welded to the first current collector above the first negative electrode tab stack and the second negative electrode tab stack.

In another embodiment, a secondary battery includes an electrode assembly including negative electrodes each including a negative electrode tab and positive electrodes arranged alternately with the negative electrodes and each including a positive electrode tab. The secondary battery also includes a first current collector electrically connected to the electrode assembly, and a first insulator below the first current collector. The negative electrode tabs of the negative electrodes overlap each other to form negative electrode tab stacks. The negative electrode tab stacks are arranged in positions in a direction perpendicular to a thickness direction of the electrode assembly not to overlap each other, and the first insulator is adjacent to the plurality of negative electrode tab stacks and has holes in a bottom portion.

In the present embodiment, the first insulator may further include a wall portion connected to the bottom portion and defining a concave portion.

In the present embodiment, the negative electrode tab stacks may include three negative electrode tab stacks, and the three negative electrode tab stacks may not overlap each other in the thickness direction of the electrode assembly.

In the present embodiment, the first insulator may be adjacent to the three negative electrode tab stacks and may have a step corresponding to the three negative electrode tab stacks in a plan view.

In the present embodiment, the secondary battery may further include a second current collector electrically connected to the electrode assembly and a second insulator below the second current collector. The positive electrode tabs of the positive electrodes may overlap each other to form positive electrode tab stacks. The positive electrode tab stacks may not overlap in the thickness direction of the electrode assembly, and the second insulator may be adjacent to the positive electrode tab stacks.

In the present embodiment, the second insulator may have a shape which is substantially the same as a shape of the first insulator.

In the present embodiment, the secondary battery may further include a negative electrode current collecting plate welded to the negative electrode tab stacks. The negative electrode current collecting plate may have a curved or bent shape to cover front and upper portions of the negative electrode tab stacks, and the negative electrode current collecting plate may be welded to the front portions of the negative electrode tab stacks and welded to the first current collector above the negative electrode tab stacks.

At least some of the above and other features of the invention are set out in the claims.

### BRIEF DESCRIPTION OF THE DRAWINGS

The following drawings attached to this specification illustrate embodiments of the disclosure and serve to further understand the technical idea of the disclosure together with the detailed description of the invention described below, so the disclosure should not be construed as being limited to only the matters described in such drawings:
FIG. 1 is a perspective view schematically illustrating a secondary battery according to an embodiment of the present disclosure;
FIG. 2 is a cross-sectional view schematically illustrating a cross-section taken along line A-A' of FIG. 1;
FIG. 3 is a perspective view schematically illustrating a portion of the secondary battery of FIG. 1;
FIG. 4 is a plan view schematically illustrating a portion of the secondary battery of FIG. 1;
FIG. 5 is a perspective view schematically illustrating an insulator according to one embodiment included in the secondary battery of FIG. 1;
FIG. 6 is a perspective view schematically illustrating a secondary battery according to another embodiment of the present disclosure;
FIG. 7 is a plan view schematically illustrating an upper portion of the secondary battery of FIG. 6;
FIG. 8 is a plan view schematically illustrating another embodiment of an insulator included in the secondary battery of FIG. 6; and
FIG. 9 is a perspective view schematically illustrating a secondary battery according to another embodiment of the present disclosure.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation Therefore, the embodiments disclosed in this specification and the configuration illustrated in the drawings are only one of the most preferred embodiments of the present disclosure and do not represent all the technical ideas of the present disclosure, so it should be understood that other equivalents and modifications could be made thereto without departing from the scope of the disclosure.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, for ease understanding of the present disclosure, the accompanying drawings are not drawn to real scale, but the dimensions of some components may be exaggerated. In addition, like reference numerals may be given to the like components in different embodiments.

The expression indicating that the two comparison targets are equal to each other means that the two comparison targets are 'substantially' equal to each other. Therefore, the substantial equality may include a case in which a deviation considered as being at a low level in the art is present, for example, a deviation within 5% is present. In addition, a configuration in which a particular parameter is constant in a predetermined region may mean that the parameter is constant from an average point of view.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element. In addition, when a portion is electrically coupled to another part, this includes not only the case where it is directly connected, but also the case where it is connected with another element in between.

Throughout the specification, "A and/or B" refers to either A or B or both A and B unless expressly stated otherwise. That is, "and/or" includes all or any combinations of a plurality of listed items. "C to D" refers to C or greater and D or smaller unless expressly stated otherwise.

The terms used in this specification are for describing embodiments of the present disclosure and are not intended to limit the disclosure.

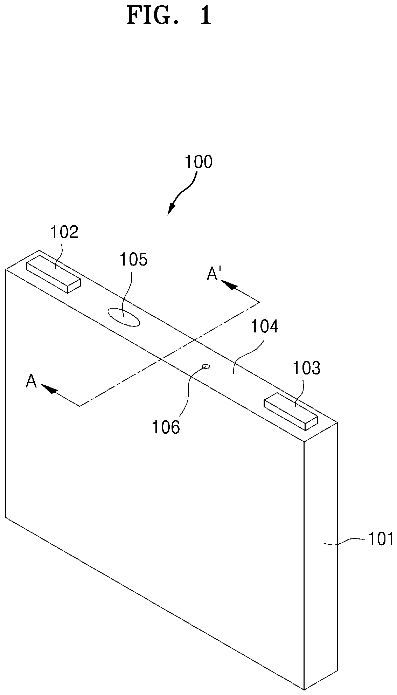

FIG. 1 is a perspective view schematically illustrating a secondary battery according to an embodiment of the present disclosure.

Referring to FIG. 1, a secondary battery 100 according to an embodiment of the present disclosure includes a case 101 that forms the exterior of the secondary battery 100 and a cap plate 104 coupled to the case 101 to seal the inside of the case 101.

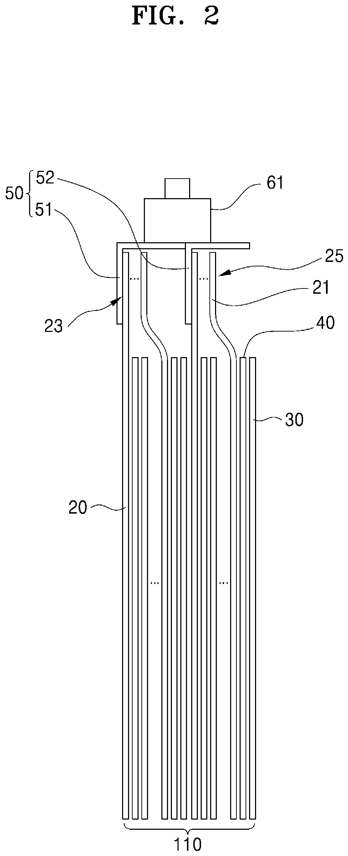

The case 101 may form the exterior of the secondary battery 100 and may have an approximately hexahedral shape with an opening formed on one side to accommodate an electrode assembly (110 in FIG. 2). However, without being limited thereto, the case 101 may have various other shapes.

The case 101 may include a conductive metal material, such as aluminium, an aluminium alloy, or nickel-plated steel.

An electrolyte, along with the electrode assembly (110 in FIG. 2), are accommodated inside the case 101, and the opening of the case 101 may be sealed by the cap plate 104.

The electrode assembly (110 in FIG. 2) may be formed by winding a laminate of a negative electrode, a separator, and a positive electrode formed in a thin plate or film shape or by repeatedly stacking them. The electrode assembly (110 in FIG. 2) is described in detail below with reference to FIG. 2.

After the electrode assembly (110 in FIG. 2) is accommodated in the case 101, the opening on one side of the case 101 may be sealed by the cap plate 104.

The cap plate 104 may include the same material as that of the case 101. The cap plate 104 may be coupled to one side of the case 101 to seal internal space of the case 101. In one or more embodiments, after the cap plate 104 is placed on top of the case 101, the cap plate 104 and the case 101 may be welded along the edge of the cap plate 104 to form an airtight coupling.

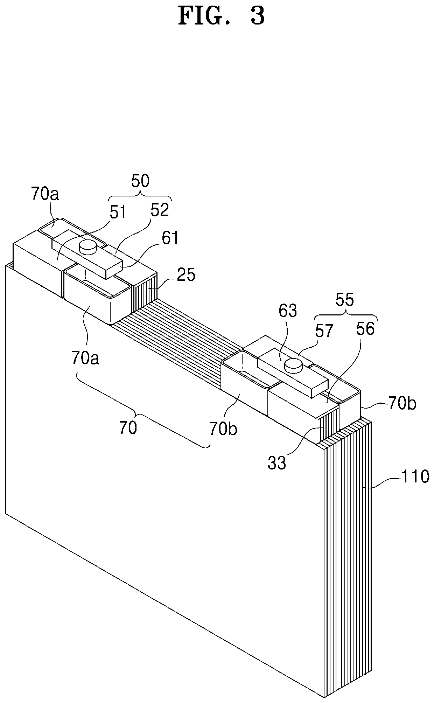

The cap plate 104 may include a negative electrode terminal 102 and a positive electrode terminal 103 that are electrically connected to the electrode assembly (110 in FIG. 2). In one or more embodiments, the negative electrode terminal 102 may be electrically connected to a first current collector (61 in FIG. 2) inside the case 101. The positive electrode terminal 103 may be electrically connected to a second current collector (63 in FIG. 3) inside the case 101.

The cap plate 104 may include a vent hole 105 configured to break to discharge gas in response to the internal pressure of the sealed case 101 being equal to or higher than a set pressure.

The cap plate 104 may include an electrolyte injection port 106. After the cap plate 104 is coupled to one side of the case 101 to seal the internal space of the case 101, an electrolyte may be injected into the sealed case 101 through the electrolyte injection hole 106.

FIG. 2 is a cross-sectional view schematically illustrating a cross-section taken along line A-A' of FIG. 1, and FIG. 3 is a perspective view schematically illustrating a portion of the secondary battery of FIG. 1.

For convenience of description, FIG. 2 shows only the electrode assembly 110, negative electrode tab stacks 23 and 25, a negative electrode current collecting plate 50, and a first current collector 61.

The electrode assembly 110 may include a negative electrode 20, a positive electrode 30, and a separator 40 between the negative electrode 20 and the positive electrode 30.

The electrode assembly 110 may be manufactured by sequentially stacking the negative electrode 20, the separator 40, and the positive electrode 30 a plurality of times. However, without being limited thereto, the electrode assembly 110 may be manufactured as a jelly roll type by sequentially stacking the negative electrode 20, the separator 40, and the positive electrode 30 and then winding the stack. In one or more embodiments, the electrode assembly 110 may be a stack type. In addition, a plurality of electrode assemblies 110 electrically connected to each other may be accommodated inside the case 101.

The negative electrode 20 may include a negative electrode active material portion to which a negative electrode active material is applied, and a negative electrode uncoated portion to which the negative electrode active material is not applied. The negative electrode 20 may include a metal foil, such as copper, a copper alloy, nickel, or a nickel alloy.

The negative electrode active material may be a carbon material, such as crystalline carbon, amorphous carbon, a carbon composite, carbon fiber, lithium metal, or a lithium alloy.

The negative electrode uncoated portion may extend to one side to form the negative electrode tab 21. In one or more embodiments, the negative electrode tab 21 may be connected to the negative electrode uncoated portion by welding, etc. That is, the negative electrode 20 may include a negative electrode tab 21 and may be electrically connected to the first current collector 61 through the negative electrode tab 21.

The negative electrode tab 21 may be located not to overlap the separator 40. In one or more embodiments, when the negative electrode 20 is manufactured, the negative electrode 20 may be cut so that the negative electrode tab 21 extends to one side, and the negative electrode tab 21 may protrude further to one side than the separator 40 without a separate additional manufacturing process.

A plurality of negative electrode tabs 21 may overlap to form negative electrode tab stacks 23 and 25. That is, each of the plurality of negative electrode tab stacks 23 and 25 may be a bundle of negative electrode tabs 21 in which a plurality of negative electrode tabs 21 overlap each other. In one or more embodiments, the plurality of negative electrode tab stacks 23 and 25 may be welded to be connected to the negative electrode current collecting plate 50, and the number of negative electrode tabs 21 included in each of the negative electrode tab stacks 23 and 25 may be set depending on the welding power utilized during welding and a thickness of the negative electrode tab 21.

Each of the plurality of negative electrode tab stacks 23 and 25 may protrude from the top of the electrode assembly 110 toward the first current collector 61 and may be electrically connected to the first current collector 61 through the negative electrode current collecting plate 50.

In one or more embodiments, the plurality of negative electrode tab stacks 23 and 25 may include a first negative electrode tab stack 23 in which at least some of the plurality of negative electrode tabs 21 overlap in a first position, and a second negative electrode tab stack 25 in which the others of the plurality of negative electrode tabs 21 overlap in a second position different from the first position. The first negative electrode tab stack 23 and the second negative electrode tab stack 25 may not overlap each other in a thickness direction of the electrode assembly 110 (e.g., the first negative electrode tab stack 23 and the second negative electrode tab stack 25 may be staggered or offset from each other in a length direction of the electrode assembly 110).

A negative electrode current collecting plate 50 may be welded to a front portion of the plurality of negative electrode tab stacks 23 and 25, so that the negative electrode 20 may be electrically connected to the negative electrode current collecting plate 50.

The positive electrode 30 may include a positive electrode active material portion to which a positive electrode active material is applied and a positive electrode uncoated portion which is a region to which the positive electrode active material is not applied. The positive electrode 30 may include a metal foil, such as aluminium or an aluminium alloy.

The positive electrode active material may be a lithium-containing transition metal oxide, such as LiCoO₂, LiNiO₂, LiMnO₂, LiMnO₄, or a lithium chalcogenide compound.

The positive electrode uncoated portion may extend to one side to form a positive electrode tab. In one or more embodiments, the positive electrode tab may be connected to the positive electrode uncoated portion by welding, etc. That is, the positive electrode 30 may include a positive electrode tab and may be electrically connected to a second current collector 63 through the positive electrode tab. That is, the positive electrode 30 may include a positive electrode tab and may be electrically connected to the second current collector 63 through the positive electrode tab.

The positive electrode tab may not overlap the separator 40. In one or more embodiments, when the positive electrode 30 is manufactured, the positive electrode 30 may be cut so that the positive electrode tab extends to one side, and the positive electrode tab may protrude further to one side than the separator 40 without a separate additional manufacturing process.

A plurality of positive electrode tabs may overlap to form positive electrode tab stacks 33 and 35. That is, each of the plurality of positive electrode tab stacks 33 and 35 may be a bundle of positive electrode tabs in which a plurality of positive electrode tabs overlap. In one or more embodiments, the plurality of positive electrode tab stacks 33 and 35 are connected by welding to the positive electrode current collecting plate 55, and the number of positive electrode tabs included in each of the positive electrode tab stacks 33 and 35 may be set depending on the welding power utilized during welding and a thickness of the positive electrode tab. In one or more embodiments, the number of positive electrode tabs included in one positive electrode tab stack 33 or 35 may be equal to the number of negative electrode tabs 21 included in one negative electrode tab stack 23 or 25.

Each of the plurality of positive electrode tab stacks 33 and 35 may protrude from the top of the electrode assembly 110 toward the second current collector 63 and may be electrically connected to the second current collector 63 through the positive electrode current collecting plate 55.

In one or more embodiments, the plurality of positive electrode tab stacks 33 and 35 may include a first positive electrode tab stack 33 in which at least some of the plurality of positive electrode tabs overlap in a third position and a second positive electrode tab stack 35 in which the others of the plurality of positive electrode tabs overlap in a fourth position different from the third position. The first positive electrode tab stack 33 and the second positive electrode tab stack 35 may not overlap in the thickness direction of the electrode assembly 110 (e.g., the first positive electrode tab stack 33 and the second positive electrode tab stack 35 may be staggered or offset from each other in a length direction of the electrode assembly 110). In addition, the first positive electrode tab stack 33 and the second positive electrode tab stack 35 may be arranged symmetrically or substantially symmetrically with the first negative electrode tab stack 23 and the second negative electrode tab stack 25.

The positive electrode current collecting plate 55 may be welded to the front portion of the plurality of positive electrode tab stacks 33 and 35, so that the positive electrode 30 may be electrically connected the positive electrode current collecting plate 55.

The separator 40 is a film located between the negative electrode 20 and the positive electrode 30 to prevent (or at least mitigate) electrical contact between the negative electrode 20 and the positive electrode 30 and to prevent (or at least mitigate) a short circuit between the negative electrode 20 and the positive electrode 30 and to enable lithium ions to migrate.

The area of the separator 40 may be greater than the area of the negative electrode 20 and the positive electrode 30, and accordingly, the separator 40 may protrude further toward the first current collector 61 and the second current collector 63 than the negative electrode 20 and the positive electrode 30.

The separator 40 may be formed of polyethylene, polypropylene, or a composite film of polyethylene and polypropylene. However, in the present disclosure, the material of the separator 40 is not limited, and in some embodiments, the separator 40 may be replaced with a solid electrolyte.

In one or more embodiments, the negative electrode current collecting plate 50 may be welded and electrically connected to each of the plurality of negative electrode tab stacks 23 and 25. According to an embodiment, welding between the negative electrode current collecting plate 50 and the plurality of negative electrode tab stacks 23 and 25 may be performed by laser welding.

The negative electrode current collecting plate 50 may have a curved or bent shape to cover the front portions and upper portions of the first negative electrode tab stack 23 and the second negative electrode tab stack 25.

In one or more embodiments, because the first negative electrode tab stack 23 and the second negative electrode tab stack 25 do not overlap each other, the negative electrode current collecting plate 50 may include a first negative electrode current collecting plate 51 welded to the first negative electrode tab stack 23 and a second negative electrode current collecting plate 52 welded to the second negative electrode tab stack 25.

In one or more embodiments, the first negative electrode current collecting plate 51 may be surface-welded to the front portion of the first negative electrode tab stack 23 and the second negative electrode current collecting plate 52 may be surface-welded to the front portion of the second negative electrode tab stack 25 by laser irradiation. Accordingly, the welding area may increase due to the surface-welding, and contact resistance between the negative electrode current collecting plate 50 and the negative electrode tab stacks 23 and 25 may decrease.

Because the plurality of negative electrode tab stacks 23 and 25 do not overlap the separator 40 and protrude from the top of the electrode assembly 110, the negative electrode current collecting plate 50 may be welded to each of the plurality of negative electrode tab stacks 23 and 25 outside the separator 40. Therefore, although the welding power increases during welding of the negative electrode current collecting plate 50 and the plurality of negative electrode tab stacks 23 and 25, the separator 40 may be prevented (or at least mitigated) from being damaged by the laser utilized in the welding process.

In addition, welding the negative electrode current collecting plate 50 and the plurality of negative electrode tab stacks 23 and 25 outside the separator 40 may increase welding power without the risk of (or with reduced risk of) damage to the separator 40, and thus, welding may be performed with the thicker negative electrode collecting plate 50, thereby manufacturing the secondary battery 100 that exhibits reduced heat generation during charging and discharging and is therefore advantageous for rapid charging.

In addition, unlike welding between the existing current collecting plate and a substrate, welding the negative electrode current collecting plate 50 and the plurality of negative electrode tab stacks 23 and 25 outside the separator 40 may eliminate a forming process required in the process of welding the substrate, thereby preventing the creation of foreign matter and damage to a tab.

In one or more embodiments, the negative electrode current collecting plate 50 has a curved or bent shape to cover the front and upper portions of the first negative electrode tab stack 23 and the second negative electrode tab stack 25 and the negative electrode current collecting plate 50 may be welded to the first current collector 61 above the plurality of negative electrode tab stacks 23 and 25.

In one or more embodiments, as shown in FIG. 3, the area of the first negative electrode current collecting plate 51 located on the first negative electrode tab stack 23 may be equal (or substantially equal) to the area of an upper surface of the first negative electrode tab stack 23, the area of the second negative electrode current collecting plate 52 located on the second negative electrode tab stack 25 may be equal (or substantially equal) to the area of an upper surface of the second negative electrode tab stack 25.

In one or more embodiments, the ends of the first negative electrode current collecting plate 51 and the second negative electrode current collecting plate 52 may be the same (or substantially the same) on the first negative electrode tab stack 23 and the second negative electrode tab stack 25, respectively. In one or more embodiments, although bending points of the first negative electrode current collecting plate 51 and the second negative electrode current collecting plate 52 are different from each other, the ends of the first negative electrode current collecting plate 51 and the second negative electrode current collecting plate 52 may be the same (or substantially the same), and as a result, the area of the upper surface of the first negative electrode current collecting plate 51 may be larger than the area of the upper surface of the second negative electrode current collecting plate 52. Accordingly, a region may be formed in which the upper surface of the first negative electrode current collecting plate 51 and the upper surface of the second negative electrode current collecting plate 52 are continuously connected, and thus, welding between the negative electrode current collecting plate 50 and the first current collector 61 may be performed more easily.

The positive electrode current collecting plate 55 may be electrically connected to each of the plurality of positive electrode tab stacks 33 and 35 by welding. According to an embodiment, welding between the positive electrode current collecting plate 55 and the plurality of positive electrode tab stacks 33 and 35 may be performed by laser welding.

The positive electrode current collecting plate 55 may have a curved or bent shape to cover the front and upper portions of the first positive electrode tab stack 33 and the second positive electrode tab stack 35.

In one or more embodiments, because the first positive electrode tab stack 33 and the second positive electrode tab stack 35 do not overlap each other, the positive electrode current collecting plate 55 may include a first positive electrode current collecting plate 56 welded to the first positive electrode tab stack 33 and a second positive electrode current collecting plate 57 welded to the second positive electrode tab stack 35.

In one or more embodiments, the first positive electrode current collecting plate 56 may be surface-welded to the front portion of the first positive electrode tab stack 33 and the second positive electrode current collecting plate 57 may be surface-welded to the front portion of the second positive electrode tab stack 35 by laser irradiation.

In one or more embodiments, because the plurality of positive electrode tab stacks 33 and 35 do not overlap the separator 40 and protrude from the top of the electrode assembly 110, the positive electrode current collecting plate 55 may be welded to each of the plurality of positive electrode tab stacks 33 and 35 outside the separator 40. Therefore, although the welding power increases during welding of the positive electrode current collecting plate 55 and the plurality of positive electrode tab stacks 33 and 35, the separator 40 may be prevented (or at least mitigated) from being damaged by a laser.

In addition, by increasing the welding power without the risk of (or with reduced risk of) damage to the separator 40, each of the plurality of positive electrode tab stacks 33 and 35 may be welded with the thicker positive electrode current collecting plate 55. Accordingly, contact resistance between the positive electrode current collecting plate 55 and the positive electrode tab stacks 33 and 35 may be reduced, allowing the secondary battery 100 to be charged and discharged with high power, and the secondary battery 100 advantageous for rapid charging may be manufactured.

In addition, the positive electrode current collecting plate 55 may have a curved or bent shape to cover the front and upper portions of the first positive electrode tab stack 33 and the second positive electrode tab stack 35 and may be welded to the second current collector 63 above the plurality of positive electrode tab stacks 33 and 35.

In one or more embodiments, as shown in FIG. 3, the area of the first positive electrode current collecting plate 56 located on the first positive electrode tab stack 33 may be equal (or substantially equal) to the area of the upper surface of the first positive electrode tab stack 33, and the area of the second positive electrode current collecting plate 57 located on the second positive electrode tab stack 35 may be equal (or substantially equal) to the area of the upper surface of the second positive electrode tab stack 35.

In one or more embodiments, the ends of the first positive electrode current collecting plate 56 and the second positive electrode current collecting plate 57 may be the same (or substantially the same) on the first positive electrode tab stack 33 and the second positive electrode tab stack 35, respectively. In one or more embodiments, although bending points of the first positive electrode current collecting plate 56 and the second positive electrode current collecting plate 57 are different from each other, the ends of the first positive electrode current collecting plate 56 and the second positive electrode current collecting plate 57 may be the same (or substantially the same), and as a result, the area of the upper surface of the first positive electrode current collecting plate 56 may be larger than the area of the upper surface of the second positive electrode current collecting plate 57. Accordingly, the upper surface of the first positive electrode current collecting plate 56 and the upper surface of the second positive electrode current collecting plate 57 may be continuously connected, and thus, welding between the positive electrode current collecting plate 55 and the second positive electrode current collector 63 may be performed more easily.

A shape of the positive electrode current collecting plate 55 may be the same (or substantially the same) as that of the negative electrode current collecting plate 50.

The first current collector 61 may be on the negative electrode current collecting plate 50 and a first insulator 70a, which is described below. A lower end of the first current collector 61 may be electrically connected to the negative electrode current collecting plate 50 by welding, and an upper end of the first current collector 61 may be electrically connected to the negative electrode terminal 102 (see FIG. 1).

The second current collector 63 may be on the positive electrode current collecting plate 55 and a second insulator 70b, which is described below. A lower end of the second current collector 63 may be electrically connected to the positive electrode current collecting plate 55 by welding, and an upper end of the second current collector 63 may be electrically connected to the positive electrode terminal 103 (see FIG. 1).

The first insulator 70a may be between the electrode assembly 110 and the first current collector 61 in a layer in which the plurality of negative electrode tab stacks 23 and 25 exist. The first insulator 70a may be adjacent to both the first negative electrode tab stack 23 and the second negative electrode tab stack 25.

In one or more embodiments, as shown in FIG. 3, two first insulators 70a may overlap the first negative electrode tab stack 23 and the second negative electrode tab stack 25, respectively, in the thickness direction of the electrode assembly 110.

In one or more embodiments in which the first negative electrode current collecting plate 51 extends further in the thickness direction of the electrode assembly 110 so that the ends of the first negative electrode current collecting plate 51 and the second negative electrode current collecting plate 52 are the same (or substantially the same), one first insulator 70a may overlap the second negative electrode tab stack 25 in the thickness direction of the electrode assembly 110.

In one or more embodiments in which the first negative electrode current collecting plate 51 extends further in the thickness direction of the electrode assembly 110 so that the ends of the first negative electrode current collecting plate 51 and the second negative electrode current collecting plate 52 are the same (or substantially the same), the first insulator 70a may be further below the negative electrode current collecting plate 50. In one or more embodiments, a total of two first insulators 70a may be provided: one first insulator 70a may be in a portion covered with the negative electrode current collecting plate 50 to overlap the first negative electrode tab stack 23 in the thickness direction of the electrode assembly 110 and another first insulator 70a may be in a portion not covered with the negative electrode current collecting plate 50 but overlapping the second negative electrode tab stack 25 in the thickness direction of the electrode assembly 110.

In one or more embodiments, the height of the first insulator 70a may be equal (or substantially equal) to the sum of the length of the negative electrode tab 21 and the thickness of the negative electrode current collecting plate 50. The first insulator 70a may have a roughly rectangular parallelepiped shape, but without being limited thereto, the first insulator 70a may have various shapes depending on the number of negative electrode tab stacks.

Two second insulators 70b may be arranged to overlap the first positive electrode tab stack 33 and the second positive electrode tab stack 35, respectively, in the thickness direction of the electrode assembly 110.

In one or more embodiments in which the first positive electrode current collecting plate 56 extends further in the thickness direction of the electrode assembly 110 so that the ends of the first positive electrode current collecting plate 56 and the second positive electrode current collecting plate 57 are the same (or substantially the same), one second insulator 70b may overlap the second positive electrode tab stack 35 in the thickness direction of the electrode assembly 110.

In one or more embodiments in which the first positive electrode current collecting plate 56 extends further in the thickness direction of the electrode assembly 110 so that the ends of the first positive electrode current collecting plate 56 and the second positive electrode current collecting plate 57 are the same (or substantially the same), the second insulator 70b may be below the positive electrode current collecting plate 55. In one or more embodiments, a total of two second insulators 70b may be provided: one second insulator 70b may be in a portion covered with the positive electrode current collecting plate 55 to overlap the first positive electrode tab stack 33 in the thickness direction of the electrode assembly 110 and another second insulator 70b may be in a portion not covered with the positive electrode current collecting plate 55 but overlapping the second positive electrode tab stack 35 in the thickness direction of the electrode assembly 110.

The shape and effect of the second insulator 70b may be the same as those of the first insulator 70a, and the location of the second insulator 70b may be the same as and/or symmetrical (or substantially symmetrical) to the location of the first insulator 70a.

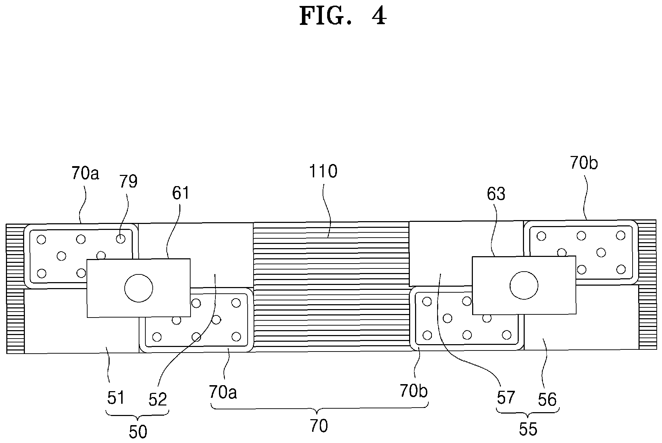

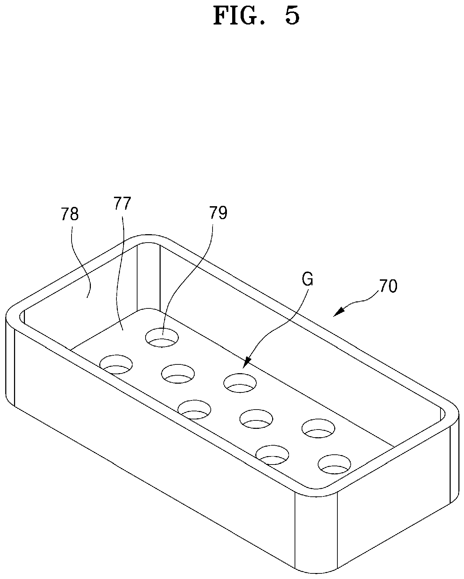

FIG. 4 is a plan view schematically illustrating a portion of the secondary battery of FIG. 1, and FIG. 5 is a perspective view schematically illustrating an embodiment of an insulator included in the secondary battery of FIG. 1.

In FIGS. 4 and 5, an insulator 70 refers to both the first insulator 70a and the second insulator 70b of FIG. 3.

Referring to FIGS. 4 and 5, the insulator 70 may include a bottom portion 77 and a wall portion 78 connected to the bottom portion 77 to define a concave portion G. In addition, the bottom portion 77 may include a plurality of holes 79 penetrating through the bottom portion 77.

When manufacturing a secondary battery, it may be advantageous to use the minimum amount of electrolyte to minimize the weight of the secondary battery, but if the electrode assembly 110 is not sufficiently impregnated with the electrolyte, the performance of the secondary battery may deteriorate. In one or more embodiments in which the insulator 70 includes a plurality of holes 79 penetrating through the bottom portion 77, even if the electrolyte being injected splashes toward the electrode, the electrolyte splashed toward the electrode may be discharged toward the electrode assembly (110 in FIG. 2) through the holes 79, thereby preventing the performance of the secondary battery from deteriorating even though the minimum amount (or substantially the minimum amount) of electrolyte is used.

The plurality of holes 79 penetrating through the bottom portion 77 may have various shapes. In one or more embodiments, the holes 79 may have a circular, slot, or honeycomb shape. In an embodiment in which the holes 79 have a slot shape, the area of the holes 79 may be maximized, facilitating discharge of the electrolyte splashed toward the electrode assembly 110. In addition, in an embodiment in which the holes 79 have a honeycomb shape, the holes 79 may have a dense structure, so that the discharge efficiency of the electrolyte splashed toward the electrode assembly 110 may be improved and the mechanical stability of the insulator 70 may also be improved.

In one or more embodiments, when the first current collector 61 is on the negative electrode current collecting plate (50 in FIG. 3) and the second current collector 63 is on the positive electrode current collecting plate 55, pressure may be applied to the separator 40 that protrudes further toward the current collector 61 than the negative electrode 20 and the positive electrode 30, causing damage to the separator 40. However, when the insulator 70 including the concave portion G is located on the electrode assembly (110 in FIG. 3), the pressure applied to the separator (40 in FIG. 2) may be distributed, and thus, damage to the separator 40 may be prevented (or at least mitigated).

In addition, the insulator 70 may have a shape corresponding to a plurality of tab stacks, thereby protecting the plurality of tab stacks from impact and preventing damage to the negative electrode tab 21 and/or the positive electrode tab that may otherwise occur when assembling or using the secondary battery 100.

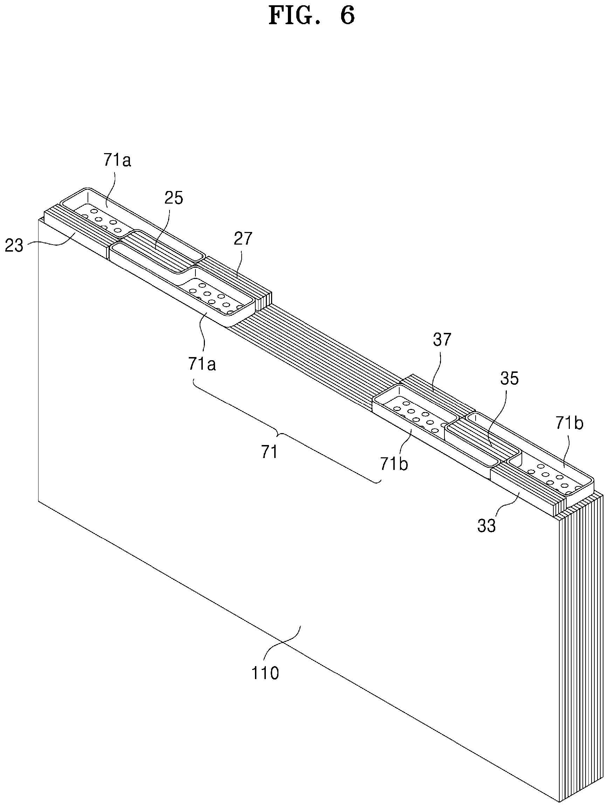

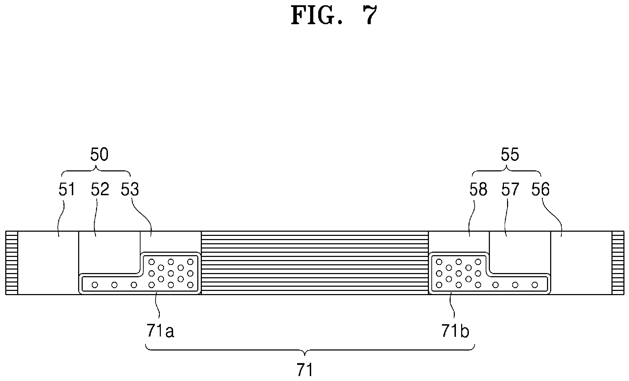

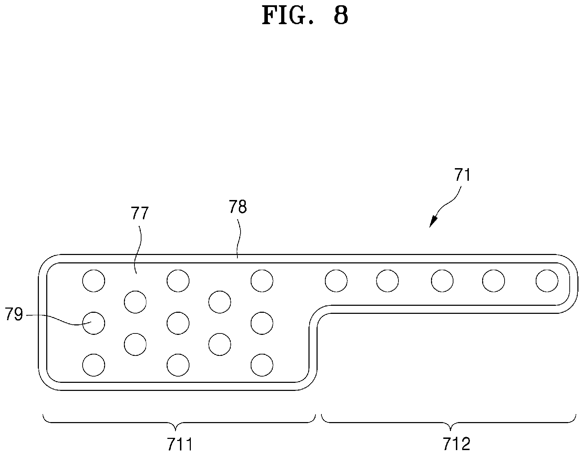

FIG. 6 is a perspective view schematically illustrating a secondary battery according to another embodiment of the present disclosure, FIG. 7 is a plan view schematically illustrating an upper portion of the secondary battery of FIG. 6, and FIG. 8 is a plan view schematically illustrating another example of an insulator included in the secondary battery of FIG. 6.

Referring to FIGS. 6 to 8, a plurality of negative electrode tabs 21 may overlap to form negative electrode tab stacks 23, 25, and 27. The number of negative electrode tabs 21 included in each of the negative electrode tab stacks 23, 25, and 27 may depend on the welding power utilized and the thickness of the negative electrode tab 21. The number of negative electrode tabs 21 included in each of the negative electrode tab stacks 23, 25, and 27 may be the same. In one or more embodiments, the negative electrode tab stacks 23, 25, and 27 may not overlap each other in the thickness direction of the electrode assembly 110 (e.g., the negative electrode tab stacks 23, 25, and 27 may be staggered or offset in the lengthwise direction of the electrode assembly 110).

The negative electrode current collecting plate 50 may have a curved or bent shape to cover the front and upper portions of the first negative electrode tab stack 23, the second negative electrode tab stack 25, and the third negative electrode tab stack 27 and may be welded to the first current collector 61 on the plurality of negative electrode tab stacks 23, 25, and 27.

In one or more embodiments, because the first negative electrode tab stack 23, the second negative electrode tab stack 25, and the third negative electrode tab stack 27 do not overlap each other, the negative electrode current collecting plate 50 may include the first negative electrode current collecting plate 51 welded to the first negative electrode tab stack 23, the second negative electrode current collecting plate 52 welded to the second negative electrode tab stack 25, and the third negative electrode current collecting plate 53 welded to the third negative electrode tab stack 27.

In one or more embodiments, the first negative electrode current collecting plate 51 may be welded to the front portion of the first negative electrode tab stack 23, the second negative electrode current collecting plate 52 may be welded to the front portion of the second negative electrode tab stack 25, and the third negative electrode current collecting plate 53 may be welded to the front portion of the third negative electrode tab stack 27 by a laser.

The area of the first negative electrode current collecting plate 51 located on the first negative electrode tab stack 23 may be equal (or substantially equal) to the area of the upper surface of the first negative electrode tab stack 23, the area of the second negative electrode current collecting plate 52 located on the second negative electrode tab stack 25 may be equal (or substantially equal) to the area of the upper surface of the second negative electrode tab stack 25, and the area of the third negative electrode current collecting plate 53 located on the third negative electrode tab stack 27 may be equal (or substantially equal) to the area of the upper surface of the third negative electrode tab stack 27.

In one or more embodiments, the ends of the first negative electrode current collecting plate 51, the second negative electrode current collecting plate 52, and the third negative electrode current collecting plate 53 may be the same (or substantially the same) on the first negative electrode tab stack 23, the second negative electrode tab stack 25, and the third negative electrode tab stack 27. In one or more embodiments, although the bending points of the first negative electrode current collecting plate 51, the second negative electrode current collecting plate 52, and the third negative electrode current collecting plate 53 are different from each other, the ends of the first negative electrode current collecting plate 51, the second negative electrode current collecting plate 52, and the third negative electrode current collecting plate 53 may be the same (or substantially equal), and as a result, the area of the upper surface of the first negative electrode current collecting plate 51 may be larger than the area of the upper surface of the second negative electrode current collecting plate 52, and the area of the upper surface of the second negative electrode current collecting plate 52 may be formed to be larger than the area of the upper surface of the third negative electrode current collecting plate 53. Accordingly, a region may be formed in which the upper surface of the first negative electrode current collecting plate 51, the upper surface of the second negative electrode current collecting plate 52, and the upper surface of the third negative electrode current collecting plate 53 are continuously connected, and thus, welding between the negative electrode current collecting plate 53 and the first current collector 61 may be performed more easily.

The case of the positive electrode 30 may be the same as the case of the negative electrode 20. A plurality of positive electrode tabs may overlap to form the positive electrode tab stacks 33, 35, and 37. The number of positive electrode tabs included in each of the positive electrode tab stacks 33, 35, and 37 may depend on the welding power and the thickness of the positive electrode tab. Each of the positive electrode tab stacks 33, 35, and 37 may not overlap each other in the thickness direction of the electrode assembly 110 (e.g., the positive electrode tab stacks 33, 35, and 37 may be staggered or offset in the lengthwise direction of the electrode assembly 110).

The positive electrode tab stacks 33, 35, and 37 may be arranged to be identical to and/or symmetrical (or substantially symmetrical) to the negative electrode tab stacks 23, 25, and 27, respectively.

The positive electrode current collecting plate 55 may have a curved or bent shape to cover the front and upper portions of the first positive electrode tab stack 33, the second positive electrode tab stack 35, and the third positive electrode tab stack 37 and may be welded to the second current collector 63 above the plurality of positive electrode tab stacks 33, 35, and 37.

In one or more embodiments, because the first positive electrode tab stack 33, the second positive electrode tab stack 35, and the third positive electrode tab stack 37 do not overlap each other, the positive electrode current collecting plate 55 may include the first positive electrode current collecting plate 56 welded to the first positive electrode tap stack 33, the second positive electrode current collecting plate 57 welded to the second positive electrode tab stack 35, and the third positive electrode current collecting plate 58 welded to the third positive electrode tab stack 37.

In one or more embodiments, the first positive electrode current collecting plate 56 may be welded to the front portion of the first positive electrode tab stack 33, the second positive electrode current collecting plate 57 may be welded to the front portion of the second positive electrode tab stack 35, and the third positive electrode current collecting plate 58 may be welded to the front portion of the third positive electrode tab stack 37 by a laser.

The shape of the positive electrode current collecting plate 55 may have a shape the same as and/or symmetrical (or substantially symmetrical) to that of the negative electrode current collecting plate 50.

Referring to FIGS. 6 and 7, the first insulator 71a may be located between the electrode assembly 110 and the first current collector 61 in a layer in which the plurality of negative electrode tab stacks 23, 25, and 27 exist. The first insulator 71 a may be arranged adjacent to the first negative electrode tab stack 23, the second negative electrode tab stack 25, and the third negative electrode tab stack 27 and may have a multi-stage shape having a step between a wider portion and a narrower portion.

In one or more embodiments, two first insulators 71a may be arranged to overlap the first negative electrode tab stack 23, the second negative electrode tab stack 25, and the third negative electrode tab stack 27 in the thickness direction of the electrode assembly 110. In one or more embodiments in which the first negative electrode current collecting plate 51 and the second negative electrode current collecting plate 52 extend further in the thickness direction of the electrode assembly 110 so that the ends of the first negative electrode current collecting plate 51, the second negative electrode current collecting plate 52, and the third negative electrode current collecting plate 53 are the same (or substantially the same), one first insulator 71a having a multi-stage shape may overlap the second negative electrode tab stack 25 and the third negative electrode tab stack 27 in the thickness direction of the electrode assembly 110.

In one or more embodiments, referring to FIGS. 6 and 7, in which the first negative electrode current collecting plate 51 and the second negative electrode current collecting plate 52 further extend in the thickness direction of the electrode assembly 110 so that the ends of the first negative electrode current collecting plate 51, the second negative electrode current collecting plate 52, and the third negative electrode current collecting plate 53 are the same (or substantially the same), the first insulator 71a may be below the negative electrode current collecting plate 50. That is, a total of two first insulators 71a may be provided: one first insulator 71a may be in a portion covered with the negative electrode current collecting plate 50 to overlap the first negative electrode tab stack 23 and the second negative electrode tab stack 25 in the thickness direction of the electrode assembly 110 and another first insulator 71a may be in a portion not covered with the negative electrode current collecting plate 50 but overlapping the second negative electrode tab stack 25 and the third negative electrode tab stack 27 in the thickness direction of the electrode assembly 110.

The height of the first insulator 71a may be equal (or substantially equal) to the sum of the length of the negative electrode tab 21 and the thickness of the negative electrode current collecting plate 50.

The second insulator 71b may have a multi-stage shape having a step to be adjacent to the first positive electrode tab stack 33, the second positive electrode tab stack 35, and the third positive electrode tab stack 37 in a layer in which the plurality of positive electrode tab stacks 33, 35, and 37 exist. Depending on the arrangement of the plurality of positive electrode tab stacks 33, 35, and 37, the second insulator 71b may have the same shape (or substantially the same shape) as that of the first insulator 71a and symmetrical (or substantially symmetrical) to the first insulator 71a.

The insulator 71, which includes the first insulator 71a and the second insulator 71b, may include the bottom portion 77 and the wall portion 78 connected to the bottom 77 to define the concave portion G. The first insulator 71a may include a shorter portion 712 located adjacent to the first negative electrode tab stack 23 and the second negative electrode tab stack 25 and a longer portion 711 located adjacent to the second negative electrode tab stack 25 and the third negative electrode tab stack 27. The second insulator 71b may include the shorter portion 712 located adjacent to the first positive electrode tab stack 33 and the second positive electrode tab stack 35 and the longer portion 711 located adjacent to the second positive electrode tab stack 35 and the third positive electrode tab stack 37.

The first insulator 71a and the second insulator 71b may have the same effect as the first insulator 70a and the second insulator 70b described above, such as improving mechanical stability and preventing (or at least mitigating) damage to the separator 40.

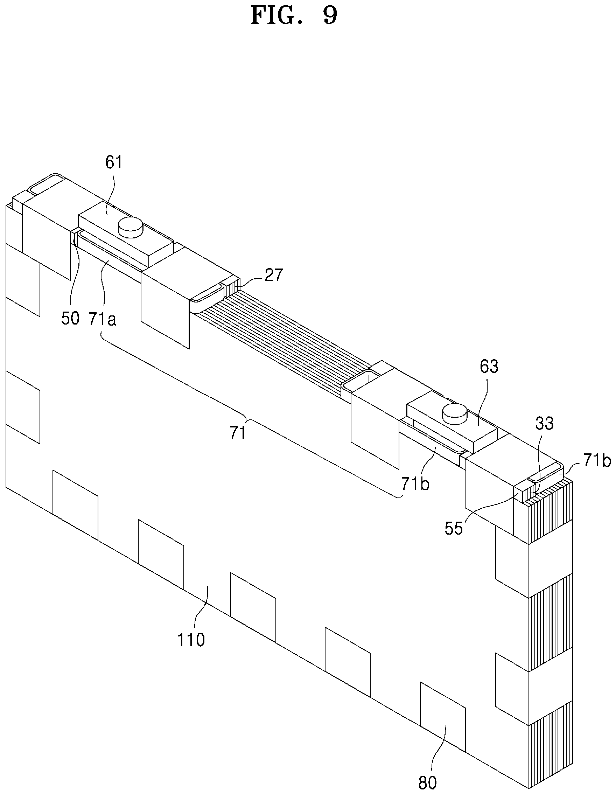

FIG. 9 is a perspective view schematically illustrating a secondary battery according to another embodiment of the present disclosure.

Referring to FIG. 9, the secondary battery 100 according to an embodiment may include the electrode assembly 110, the negative and positive electrode current collecting plates 50 and 55, the first and second current collectors 61 and 63, the insulator 71, and an insulating tape 80. When assembling or using the secondary battery 100, the insulating tape 80 may be attached to secure the electrode assembly 110, the negative and positive electrode current collectors 50 and 55, and the insulator 71.

The insulating tape 80 may be attached to the top, bottom, left, and right sides of the electrode assembly 110 to cover the thickness of the electrode assembly 110. In addition, in an embodiment in which the negative electrode 20 and the positive electrode 30 each have three tab stacks, when the upper portion of the electrode assembly 110 is fixed with the insulating tape 80, the insulating tape 80 may be attached, starting from the front surface of the electrode assembly 110 to pass through the front portion and the upper portion of the first negative electrode current collecting plate 51 to cover the rear surface of the electrode assembly 110, and/or starting from the front surface of the electrode assembly 110 to pass through the front portion and the upper portion of the first insulator 71a and cross the upper portion of the third negative electrode current collecting plate 53 to cover the rear surface of the electrode assembly 110. In one or more embodiments, regarding the positive electrode 30, the insulating tape 80 may be attached to be the same and/or symmetrical.

According to embodiments of the present disclosure, an insulator is located between the current collector and the electrode assembly to distribute pressure on the electrode assembly, thereby preventing (or at least mitigating) damage to the separator and improving the structural stability of the secondary battery.

In addition, by welding the current collecting plate with a plurality of tab stacks, charging/discharging and rapid charging may be performed at high output.

However, the effects that may be achieved through the present disclosure are not limited to the above-mentioned effects, and other technical effects not mentioned will be clearly understood by those skilled in the art from the description of the invention described below.

As such, the present disclosure has been described with reference to an embodiment shown in the drawings, but this is merely an example, and those skilled in the art will understand that various modifications and variations of the embodiment may be derived therefrom. Therefore, the true scope of the present invention should be determined by the technical idea of the appended claims.

Embodiments are set out in the following clauses:
Clause 1. A secondary battery comprising:
   an electrode assembly including a plurality of negative electrodes each including a negative electrode tab and a plurality of positive electrodes arranged alternately with the negative electrodes and each including a positive electrode tab;
   a first current collector electrically connected to the negative electrodes; and
   a first insulator disposed below the first current collector,
   wherein negative electrode tabs of at least some of the plurality of negative electrodes overlap in a first position to form a first negative electrode tab stack and negative electrode tabs of others of the plurality of negative electrodes overlap in a second position, different from the first position, to form a second negative electrode tab stack, and
   the first insulator is disposed adjacent to the first negative electrode tab stack and the second negative electrode tab stack simultaneously.
Clause 2. The secondary battery of clause 1, wherein
   the first insulator includes a bottom portion and a wall portion connected to the bottom portion to define a concave portion, and the bottom portion includes a plurality of holes penetrating through the bottom portion.
Clause 3. The secondary battery of clause 1 or clause 2, wherein
   the first negative electrode tab stack and the second negative electrode tab stack do not overlap each other in a thickness direction of the electrode assembly.
Clause 4. The secondary battery of any one of clauses 1 to 3, wherein
   the negative electrode tabs of some of the plurality of negative electrodes constitute a third negative electrode tab stack that is different from the first negative electrode tab stack and the second negative electrode tab stack, and
   the first negative electrode tab stack, the second negative electrode tab stack, and the third negative electrode tab stack do not overlap each other in a thickness direction of the electrode assembly.
Clause 5. The secondary battery of clause 4, wherein
   the first insulator is adjacent to the first negative electrode tab stack, the second negative electrode tab stack, and the third negative electrode tab stack simultaneously and has a step corresponding to the first negative electrode tab stack, the second negative electrode tab stack, and the third negative electrode tab stack in a plan view.
Clause 6. The secondary battery of any one of clauses 1 to 5, further comprising:
   a separator located between each of the negative electrodes and each of the positive electrodes.
Clause 7. The secondary battery of any one of clauses 1 to 6, further comprising:
   a second current collector electrically connected to the positive electrodes; and
   a second insulator disposed below the second current collector,
   wherein positive electrode tabs of at least some of the plurality of positive electrodes overlap in a third position to form a first positive electrode tab stack, and positive electrode tabs of others of the plurality of positive electrodes overlap in a fourth position different from the third position to form a second positive electrode tab stack, and
   the second insulator is disposed adjacent to the first positive electrode tab stack and the second positive electrode tab stack simultaneously.
Clause 8. The secondary battery of clause 7, wherein
   the first positive electrode tab stack and the second positive electrode tab stack are arranged symmetrically with the first negative electrode tab stack and the second negative electrode tab stack.
Clause 9. The secondary battery of clause 7 or clause 8, wherein
   the second insulator has a shape which is the same as a shape of the first insulator.
Clause 10. The secondary battery of any one of clauses 1 to 9, further comprising:
   a negative electrode current collecting plate between the first negative electrode tab stack and the second negative electrode tab stack and the first current collector,
   wherein the negative electrode current collecting plate has a curved shape to cover front and upper portions of the first negative electrode tab stack and the second negative electrode tab stack,
   the negative electrode current collecting plate is welded to the first negative electrode tab stack and the second negative electrode tab stack in front portions of the first negative electrode tab stack and the second negative electrode tab stack, and
   the negative electrode current collecting plate is welded to the first current collector on the upper portions of the first negative electrode tab stack and the second negative electrode tab stack.
Clause 11. A secondary battery comprising:
   an electrode assembly including a plurality of negative electrodes each including a negative electrode tab and a plurality of positive electrodes arranged alternately with the negative electrodes and each including a positive electrode tab;
   a first current collector electrically connected to the electrode assembly; and
   a first insulator disposed below the first current collector,
   wherein the negative electrode tabs of the plurality of negative electrodes overlap each other to form a plurality of negative electrode tab stacks,
   the plurality of negative electrode tab stacks are arranged in positions moved in a direction perpendicular to a thickness direction of the electrode assembly not to overlap each other, and
   the first insulator is disposed adjacent to the plurality of negative electrode tab stacks simultaneously andhas a plurality of holes in a bottom portion.
Clause 12. The secondary battery of clause 11, wherein
   the first insulator further includes a wall portion connected to the bottom portion and defining a concave portion.
Clause 13. The secondary battery of clause 11 or clause 12, wherein
   each of the plurality of holes has a honeycomb shape.
Clause 14. The secondary battery of any one of clauses 11 to 13, wherein
   the plurality of negative electrode tab stacks include three negative electrode tab stacks, and the three negative electrode tab stacks do not overlap each other in the thickness direction of the electrode assembly.
Clause 15. The secondary battery of clause 14, wherein
   the first insulator is adjacent to the three negative electrode tab stacks simultaneously and has a step corresponding to the three negative electrode tab stacks in a plan view.
Clause 16. The secondary battery of any one of clauses 11 to 15, further comprising:
   a separator located between each of the negative electrodes and each of the positive electrodes.
Clause 17. The secondary battery of any one of clauses 11 to 16, further comprising:
   a second current collector electrically connected to the electrode assembly; and
   a second insulator disposed below the second current collector,
   wherein the positive electrode tabs of the plurality of positive electrodes overlap each other to form a plurality of positive electrode tab stacks,
   the plurality of positive electrode tab stacks are located not to overlap in the thickness direction of the electrode assembly, and
   the second insulator is disposed adjacent to the plurality of positive electrode tab stacks simultaneously.
Clause 18. The secondary battery of clause 17, wherein
   the plurality of positive electrode tab stacks are arranged symmetrically with the plurality of negative electrode tab stacks.
Clause 19. The secondary battery of clause 17 or clause 18, wherein
   the second insulator has a shape which is the same as a shape of the first insulator.
Clause 20. The secondary battery of any one of clauses 11 to 19, further comprising:
   a negative electrode current collecting plate welded to the plurality of negative electrode tab stacks,
   wherein the negative electrode current collecting plate has a curved shape to cover front and upper portions of the plurality of negative electrode tab stacks, and
   the negative electrode current collecting plate is welded to the front portions of the plurality of negative electrode tab stacks and welded to the first current collector on the upper portions of the plurality of negative electrode tab stacks.

## Claims

1. A secondary battery comprising:
an electrode assembly comprising a plurality of negative electrodes each including a negative electrode tab, and a plurality of positive electrodes arranged alternately with the plurality of negative electrodes and each including a positive electrode tab;
a first current collector electrically connected to the negative electrodes; and
a first insulator below the first current collector,
wherein the negative electrode tab of at least some of the plurality of negative electrodes overlap in a first position to form a first negative electrode tab stack and the negative electrode tab of others of the plurality of negative electrodes overlap in a second position, different from the first position, to form a second negative electrode tab stack, and
wherein the first insulator is adjacent to the first negative electrode tab stack and the second negative electrode tab stack.

2. The secondary battery of claim 1, wherein the first insulator comprises a bottom portion and a wall portion connected to the bottom portion to define a concave portion, and wherein the bottom portion comprises a plurality of holes penetrating through the bottom portion.

3. The secondary battery of claim 1 or claim 2, wherein the first negative electrode tab stack and the second negative electrode tab stack do not overlap each other in a thickness direction of the electrode assembly.

4. The secondary battery of any one of claims 1 to 3, wherein:
the negative electrode tab of some of the plurality of negative electrodes form a third negative electrode tab stack that is different from the first negative electrode tab stack and the second negative electrode tab stack, and
the first negative electrode tab stack, the second negative electrode tab stack, and the third negative electrode tab stack do not overlap each other in a thickness direction of the electrode assembly.

5. The secondary battery of claim 4, wherein the first insulator is adjacent to the first negative electrode tab stack, the second negative electrode tab stack, and the third negative electrode tab stack, and wherein the first insulator comprises a step corresponding to the first negative electrode tab stack, the second negative electrode tab stack, and the third negative electrode tab stack in a plan view.

6. The secondary battery of any one of claims 1 to 5, further comprising:
a second current collector electrically connected to the plurality of positive electrodes; and
a second insulator below the second current collector,
wherein the positive electrode tab of at least some of the plurality of positive electrodes overlap in a third position to form a first positive electrode tab stack, and wherein the positive electrode tab of others of the plurality of positive electrodes overlap in a fourth position different from the third position to form a second positive electrode tab stack, and
wherein the second insulator is adjacent to the first positive electrode tab stack and the second positive electrode tab stack.

7. The secondary battery of claim 6, wherein the first positive electrode tab stack and the second positive electrode tab stack are substantially symmetric with respect to the first negative electrode tab stack and the second negative electrode tab stack.

8. The secondary battery of any one of claims 1 to 7, further comprising:
a negative electrode current collecting plate between the first negative electrode tab stack and the second negative electrode tab stack and the first current collector,
wherein the negative electrode current collecting plate has a curved shape to cover front and upper portions of the first negative electrode tab stack and the second negative electrode tab stack,
wherein the negative electrode current collecting plate is welded to the first negative electrode tab stack and the second negative electrode tab stack in front portions of the first negative electrode tab stack and the second negative electrode tab stack, and
wherein the negative electrode current collecting plate is welded to the first current collector on the upper portions of the first negative electrode tab stack and the second negative electrode tab stack.

9. A secondary battery comprising:
an electrode assembly comprising a plurality of negative electrodes each including a negative electrode tab, and a plurality of positive electrodes arranged alternately with the plurality of negative electrodes and each including a positive electrode tab;
a first current collector electrically connected to the electrode assembly; and
a first insulator below the first current collector,
wherein the negative electrode tab of the plurality of negative electrodes overlap each other to form a plurality of negative electrode tab stacks,
wherein the plurality of negative electrode tab stacks is arranged at positions in a direction perpendicular to a thickness direction of the electrode assembly and do not overlap each other,
wherein the first insulator is adjacent to the plurality of negative electrode tab stacks, and
wherein the first insulator has a plurality of holes in a bottom portion of the first insulator.

10. The secondary battery of claim 9, wherein the first insulator further includes a wall portion connected to the bottom portion and defining a concave portion.

11. The secondary battery of claim 9 or claim 10, wherein the plurality of negative electrode tab stacks includes three negative electrode tab stacks, and wherein the three negative electrode tab stacks do not overlap each other in the thickness direction of the electrode assembly.

12. The secondary battery of claim 11, wherein the first insulator is adjacent to the three negative electrode tab stacks and has a step corresponding to the three negative electrode tab stacks in a plan view.

13. The secondary battery of any one of claims 9 to 12, further comprising:
a second current collector electrically connected to the electrode assembly; and
a second insulator below the second current collector,
wherein the positive electrode tab of the plurality of positive electrodes overlap each other to form a plurality of positive electrode tab stacks,
wherein the plurality of positive electrode tab stacks do not overlap in the thickness direction of the electrode assembly, and
wherein the second insulator is adjacent to the plurality of positive electrode tab stacks.

14. The secondary battery of claim 13, wherein the second insulator has a shape that is substantially same as a shape of the first insulator.

15. The secondary battery of any one of claims 9 to 14, further comprising:
a negative electrode current collecting plate welded to the plurality of negative electrode tab stacks,
wherein the negative electrode current collecting plate has a curved shape to cover front portions and upper portions of the plurality of negative electrode tab stacks, and
wherein the negative electrode current collecting plate is welded to the front portions of the plurality of negative electrode tab stacks and welded to the first current collector on the upper portions of the plurality of negative electrode tab stacks.
